# EUROPÄISCHE PATENTSCHRIFT

(11) **EP 2 121 232 B1**
(45) Veröffentlichungstag und Bekanntmachung des Hinweises auf die Patenterteilung: **21.03.2012**
(21) Anmeldenummer: 08706979.5
(22) Anmeldetag: 09.01.2008
(51) Int. Cl.: B23K 3/02

(54) **LÖTSPITZE MIT EINER EINE GITTERSTRUKTUR AUFWEISENDEN OBERFLÄCHE**
SOLDERING TIP, HAVING A SURFACE WITH A GRID STRUCTURE
PANNE DOTÉE D'UNE SURFACE DE STRUCTURE EN GRILLE

(30) Priorität: 19.02.2007 DE 202007002436 U
(43) Veröffentlichungstag der Anmeldung: 25.11.2009
(73) Patentinhaber: Cooper Tools GmbH, 74354 Besigheim (DE)
(72) Erfinder: STILLER, Thomas, 71729 Erdmannhausen (DE); BRADER, Walter, 74382 Neckarwestheim (DE); JACKOVIC, Laslo, 74394 Hessigheim (DE)
(74) Vertreter: Grünecker, Kinkeldey, Stockmair & Schwanhäusser
(86) Internationale Anmeldenummer: PCT/EP2008/000122
(87) Internationale Veröffentlichungsnummer: WO 2008/101565

(56) Entgegenhaltungen:
- DE-A1- 1 752 081
- DE-U1- 20 302 566
- US-A- 1 238 671
- US-A- 3 651 306
- US-A1- 2005 205 643

## Beschreibung

Die vorliegende Erfindung bezieht sich auf eine Lötspitze für eine allgemein als Lötvorrichtung bezeichnete Löt- oder Entlötvorrichtung, wobei die Lötspitze gemäß dem Oberbegriff des Anspruchs 1 gebildet ist (siehe, z.B., DE 17 52 081). Damit bezieht sich die Erfindung gleichermaßen auf aktive wie auf passive Lötspitzen. Bei aktiven Lötspitzen dient der Grundkörper selbst unter Zuführung elektrischer Energie als (resistives) Heizelement, er ist also wärmeerzeugend. Bei passiven Lötspitzen hingegen wird die Wärme von einem externen Heizelement erzeugt und zur Lötspitze transportiert. Der Grundkörper bei einer solchen passiven Lötspitze ist daher primär wärmeleitend. Der Grundkörper (oder "Kern") einer passiven Lötspitze besteht daher häufig aus Kupfer oder Silber.

Kupfer oder Silber sind zwar durch den Lotwerkstoff, insbesondere durch Lötzinn, gut benetzbar. Gleichzeitig haben Sie jedoch in flüssigem Zinn eine sehr hohe Ablegierungsgeschwindigkeit, d.h. eine entsprechend geringe Standzeit.

Bekannt ist es, die Standzeit zu verlängern, indem galvanisch eine Eisenschicht auf den Grundkörper oder "Kern" aufgebracht wird. Eisen ist immer noch gut mit Zinn benetzbar, weist jedoch gegenüber Kupfer oder Silber eine deutlich geringere Ablegierungsgeschwindigkeit auf.

Problematisch ist, dass seit Kurzem nur noch bleifreie Lotlegierungen erlaubt sind. Solche bleifreien Lotwerkstoffe erhöhen die Ablegierungsgeschwindigkeit durch einen höheren Anteil von Zinn in der Legierung und durch eine höhere Schmelztemperatur. Die für diese Lote notwendigen Flussmittel haben ebenfalls einen negativen Einfluss auf die Lebensdauer und auf die Benetzbarkeit der Eisenschicht.

Aufgabe der vorliegenden Erfindung ist es, eine Lötspitze zur Verfügung zu stellen, bei der das Langzeitfließverhalten gegenüber herkömmlichen Lötspitzen deutlich verbessert ist.

Gelöst wird diese Aufgabe durch eine Lötspitze mit den Merkmalen des Anspruchs 1. Vorteilhafte Weiterbildungen der Erfindung sind in den Unteransprüchen angegeben.

Bereits bei herkömmlichen Lötspitzen ist das Material der von Lötzinn benetzbaren Kontaktoberfläche so ausgebildet, dass seine Atome in einer metallischen oder Kristall-Gitterstruktur angeordnet sind. Die Erfindung sieht nun vor, in diese Gitterstruktur der Kontaktoberfläche geladene Elementarteilchen mindestens eines Fremdmaterials einzufügen-wobei der Begriff "Fremdmaterial" in diesem Zusammenhang und gemäß der Erfindung jedes sich von dem Haupt-oder Basismaterial der Kontaktoberfläche unterscheidende Material umfasst. Durch das Einfügen der geladenen Elementarteilchen des Fremdmaterials verändert sich die ursprüngliche Gitterstruktur der Kontaktoberfläche. Erstaunlicherweise hat sich herausgestellt, dass die Kontaktoberfläche auf diese Weise deutlich besser benetzbar ist, und dass sie darüber hinaus auch mechanisch deutlich stabiler wird. Beide Effekte verbessern das Langzeitfließverhalten der Lötspitze.

Besonders vorteilhaft ist die erfindungsgemäße modifizierte Kontaktoberfläche bei extrem feinen Lötspitzen für die Mikroelektronik, da solche Lötspitzen bisher auf Grund ihrer Gestalt nur eine sehr geringe inhärente Stabilität zeigen und daher eine sehr beschränkte Standzeit haben. Indem die Kontaktoberfläche solcher Lötspitzen durch das Einfügen geladener Elementarteilchen mechanisch stabilisiert werden kann, kann auch die mittlere Standzeit dieser Lötspitzen erheblich verlängert werden.

Denkbar ist es, dass auf dem Grundkörper zunächst eine spezielle Kontaktschicht vorgesehen ist, die bereits besonders gut benetzbar ist, und dass es sich bei der erfindungsgemä-βen modifizierten Kontaktoberfläche um die Oberfläche dieser Kontaktschicht handelt. Auf diese Weise wird die Benetzbarkeit der Kontaktoberfläche doppelt verbessert.

In einer anderen Variante kann es sich bei der Kontaktoberfläche um die Oberfläche des Grundkörpers selbst handeln. Diese Ausführungsvariante hat den Vorteil, dass die Lötspitze sehr einfach ausgebaut ist, da keine zusätzlichen Schichten auf dem Grundkörper vorgesehen sein müssen. Durch das Fehlen der zusätzlichen Beschichtungen kann eine solche Lötspitze auch besonders spitz zulaufen, so dass sie insbesondere für die Mikroelektronik geeignet ist.

Je nach Art des Fremdmaterials und je nach Art des Einfügens können die geladenen Elementarteilchen des Fremdmaterials an Gitterplätze der Gitterstruktur der Kontaktoberfläche und/oder an zwischen Gitterplätze eingefügt werden.

Zweckmäßig ist es, wenn in die Kontaktoberfläche zusätzlich zu den geladenen Elementarteilchen eines ersten Fremdmaterials auch geladene Elementarteilchen mindestens eines zweiten Fremdmaterials eingefügt sind. Abhängig von der Wahl der jeweiligen Fremdmaterialien könnten dadurch entweder ein Effekt (z.B. die Benetzbarkeit) besonders verstärkt oder aber zwei unterschiedliche Effekte (Benetzbarkeit und mechanische Stabilität) gefördert werden.

Als Fremdmaterialien, deren geladene Elementarteilchen in die Kontaktoberfläche eingefügt werden könnten, stehen beispielsweise Platin, Wolfram, Molybdän, Titan, Nickel, Kobalt, Germanium, Silizium, Arsen, Gallium, Stickstoff oder Kohlenstoff zur Verfügung. Das Einfügen geladener Elementarteilchen aus Platin, Wolfram, Molybdän, Titan, Nickel oder Kobalt verbessert allgemein die Standzeit der erfindungsgemäßen Lötspitzen. Werden geladene Elementarteilchen aus Germanium, Silizium, Arsen oder Gallium in die Gitterstruktur der Kontaktoberfläche eingefügt, verbessert sich die Benetzbarkeit der Lötspitze. Das Einfügen von Stickstoff oder Kohlenstoff führt dazu, dass die Lötspitzen einer höheren mechanischen Belastung widerstehen können.

Vorzugsweise sind die geladenen Elementarteilchen des Fremdmaterials homogen an der Kontaktoberfläche verteilt. Auf diese Weise kann das Langzeitfließverhalten an der gesamten Lötspitze verbessert werden, ohne dass sich Schwachstellen oder weniger gut benetzbare Stellen ausbilden.

Umgekehrt ist es jedoch auch denkbar, dass die Dichte der geladenen Elementarteilchen über die Lotspitze variiert. Damit könnte beispielsweise erreicht werden, dass die äußerste Spitze der Lötspitze mechanisch besonders fest ist, oder es könnte das Fließen des Lötwerkstoffs zur äußersten Spitze begünstigt werden.

Gemäß der Erfindung können die geladenen Elementarteilchen nicht nur unmittelbar an der Kontaktoberfläche selbst, sondern auch im Volumen unterhalb der Kontaktoberfläche in eine Gitterstruktur eingefügt sein.

Dies hätte den Vorteil, dass die Oberflächenverhältnisse erhalten bleiben, auch wenn sich die Kontaktoberfläche im Betrieb der Lötspitze abnutzen sollte.

Sind geladene Elementarteilchen auch unterhalb der Kontaktoberfläche im Volumen der Lötspitze vorhanden, wäre es denkbar, dass sich die Konzentration dieser geladenen Elementarteilchen mit zunehmender Tiefe unter der Kontaktoberfläche verändert. Beispielsweise könnte die Konzentration der geladenen Elementarteilchen abnehmen, so dass bei der Abnutzung der Lötspitze deren Benetzbarkeit schlechter wird und dem Benutzer auf diese Weise signalisiert wird, die Lötspitze auszuwechseln.

Andererseits wäre es auch denkbar, dass die Konzentration der geladenen Elementarteilchen mit zunehmender Tiefe unter der Kontaktoberfläche zunimmt. Auf diese Weise könnte zum Beispiel das Innere der Lötspitze mechanisch besonders stabil ausgebildet werden.

Vorzugsweise sind die geladenen Elementarteilchen nicht nur unmittelbar an der Kontaktoberfläche, sondern bis mindestens in eine Tiefe von 0,3 mm unterhalb der Kontaktoberfläche vorgesehen. Noch weiter bevorzugt wird das Vorsehen der geladenen Elementarteilchen bis in eine Tiefe von mindestens 1,0 mm. So kann erreicht werden, dass das verbesserte Fließverhalten des Lotwerkstoffs auf der Lötspitze auch bei einem Abnutzen der Lötspitze möglichst lange erhalten bleibt.

Möglich ist es, dass die Tiefe, bis zu der geladene Elementarteilchen in die Gitterstruktur eingefügt sind, über die Lötspitze variiert. Diese Tiefe könnte beispielsweise vom Durchmesser der Lötspitze an der jeweiligen Stelle abhängig sein.

Wenn eine Kontaktschicht auf der Außenseite der Lötspitze vorgesehen ist, könnte zwischen dem Grundkörper und dieser Kontaktschicht mindestens eine weitere Schicht vorgesehen sein, mit der die Eigenschaften der erfindungsgemäßen Lötspitze weiter modifiziert und verbessert werden.

Beispielsweise könnte zwischen dem Grundkörper und der Kontaktschicht mindestens eine Sperrschicht vorgesehen sein. Diese Sperrschicht könnte die Funktion haben, das Eindringen oder Diffundieren der geladenen Elementarteilchen in tiefere Regionen der Lötspitze zu verhindern. Eine andere Sperrwirkung könnte sich dadurch ergeben, dass die Sperrschicht von Lötzinn nicht benetzbar ist, um auf diese Weise den innenliegenden Kern- oder Grundkörper der Lötspitze zu schützen.

Ein Schutzüberzug könnte im Übrigen auch auf Abschnitten auf der Außenseite der Kontaktoberfläche vorgesehen sein, um an ausgewählten Stellen eine Benetzung der Kontaktoberfläche zu verhindern. Denkbar wäre es auch, einen solchen Schutzüberzug an bestimmten Stellen aufzubringen, an denen das Einfügen von geladenen Elementarteilchen in die Kontaktoberfläche unterbleiben soll. Geeignet sind für diesen Zweck zinn-, silber- oder goldhaltige Schutzüberzüge.

Im Folgenden wird ein bevorzugtes Ausführungsbeispiel der Erfindung anhand einer Zeichnung näher erläutert. Im Einzelnen zeigen:
- Fig. 1: einen Vertikalschnitt durch ein erstes Ausführungsbeispiel einer erfindungsgemäßen Lötspitze und
- Fig. 2: einen Vertikalschnitt durch ein zweites Ausführungsbeispiel einer erfindungsgemäßen Lötspitze.
Übereinstimmende Komponenten sind in den Figuren durchgängig mit gleichen Bezugszeichen bezeichnet.

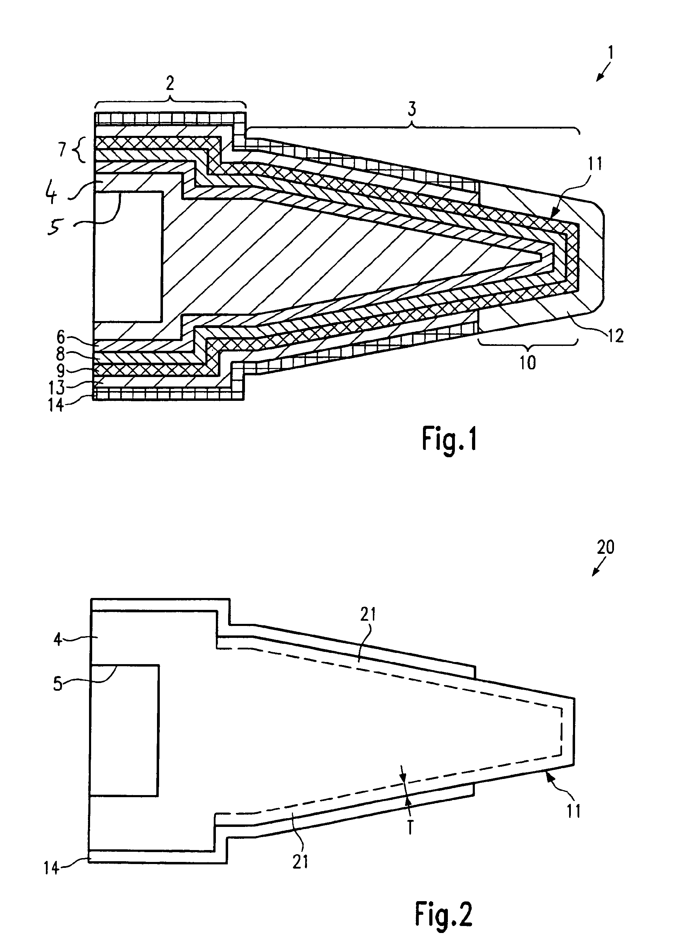

Fig. 1 zeigt ein erstes Ausführungsbeispiel einer erfindungsgemäßen Lötspitze 1 für eine Lötvorrichtung. Die Lötspitze 1 ist axialsymmetrisch mit einem im Wesentlichen zylindrischen Schaft 2 und einen sich daran anschließenden, konischen Abschnitt 3. Bei dem gezeigten Ausführungsbeispiel handelt es sich um eine passive Lötspitze 1, die in ihrem Inneren einen wärmeleitenden Grundkörper 4 aufweist, der beispielsweise aus Kupfer oder Silber bestehen kann. Bei einer aktiven Lötspitze würde der Grundkörper 4 ein Heizelement und möglicherweise einen Temperatursensor umfassen.

An dem zylindrischen Schaft 2 ist ein hier als Vertiefung ausgebildetes Befestigungselement 5 vorgesehen, mittels dessen die Lötspitze an der Lötvorrichtung befestigt werden kann. Beispielsweise könnte die Lötspitze 1 auf einen Lötkolben der Lötvorrichtung aufgesteckt werden. Um einen besseren Halt an dem Lötkolben zu gewährleisten, könnte an dem Befestigungselement 5 auch eine Raste vorgesehen sein.

Auf der Oberfläche des Grundkörpers 4 ist eine Sperrschicht 6 vorgesehen. Die Sperrschicht 6, die von Lotwerkstoff nicht benetzbar ist, ist mit der Oberfläche des Grundkörpers 4 verschmolzen. Besteht die Sperrschicht 6 aus einem Metall, so kann sie mit dem Grundkörper 4 insbesondere schmelzmetallurgisch verbunden sein. Ihre Schichtdicke kann zwischen 50 Mikrometern und etwa einem Millimeter liegen. Sie dient dazu, den Grundkörper 4 vor einer Benetzung und damit vor einem Abtrag durch den Lotwerkstoff zu schützen.

Auf der Außenseite der Sperrschicht 6 ist eine Kontaktschicht 7 vorgesehen, die in Form einer Kristall-Gitterstruktur aufgebaut ist. Die Kontaktschicht 7 umfasst einen inneren Bereich 8 und einen äußeren Bereich 9. In einem Arbeitsbereich 10 am vorderen Ende der Lötspitze 1 liegt der äußere Bereich 9 der Kontaktschicht 7 frei. Seine freiliegende Oberfläche bildet dort die Kontaktoberfläche 11, die vom Lotwerkstoff 12 benetzbar ist.

In die Gitterstruktur des äußeren Bereichs 9 der Kontaktschicht 7 und somit auch in die Gitterstruktur der Kontaktoberfläche 11 sind geladene Elementarteilchen eines Fremdmaterials eingefügt. Im dargestellten Ausführungsbeispiel handelt es sich bei der Kontaktschicht 7 um eine Eisenschicht. In den äußeren Bereichen 9 der Kontaktschicht 7 sind geladene Elementarteilchen von Platin, Wolfram, Molybdän, Titan, Nickel, Kobalt, Germanium, Silizium, Arsen, Gallium, Stickstoff und/oder Kohlenstoff eingefügt, um auf diese Weise das Langzeitfließverhalten der Lötspitze 1 zu verbessern.

Hinter dem Arbeitsbereich 10 ist auf dem rückwärtigen Teil der Lötspitze 1 auf einer Trägerschicht 13 eine Schutzschicht 14 vorgesehen, wobei die Trägerschicht 13 beispielsweise aus Nickel und die Schutzschicht 14 aus Chrom besteht. Die Chromschicht 14 ist nicht von Lotwerkstoff 12 benetzbar und verhindert so, dass der Lotwerkstoff 12 an den Schaft 2 der Lötspitze 1 fließt. Die Schutzschicht bzw. der Schutzüberzug 14 kann auch zinn-, silber-oder goldhaltig sein.

Fig. 2 zeigt ein zweites Ausführungsbeispiel einer erfindungsgemäßen Lötspitze 20, wobei die Lötspitze 20 des zweiten Ausführungsbeispiels erheblich einfacher aufgebaut ist als die Lötspitze 1 des ersten Ausführungsbeispiels. Auch die Lötspitze 20 weist einen wärmeleitenden Grundkörper 4 mit einem als Aussparung ausgebildeten Befestigungselement 5 auf. Die Lötspitze 20 hat jedoch keine Sperr- und keine spezielle Kontaktschicht. Stattdessen sind geladene Elementarteilchen eines sich vom Material des Grundkörpers 4 unterscheidenden Fremdmaterials in eine Oberflächenschicht 21 des Grundkörpers 4 eingefügt. Die Oberflächenschicht 21 erstreckt sich bis in eine Tiefe T. Im Arbeitsbereich 10 der Lötspitze 20 liegt die Oberflächenschicht 21 frei, so dass ihre Außenseite die Kontaktoberfläche 11 darstellt. Auch in die Gitterstruktur dieser Kontaktoberfläche 11 sind geladene Elementarteilchen eines Fremdmaterials (bzw. mehrerer Fremdmaterialien) eingefügt. Auf diese Weise verbessern sich die Benetzbarkeit der Lötspitze 20 und das Langzeitfließverhalten des Lotwerkstoffs 12 auf der Lötspitze 20. Durch das Fehlen einer Sperrschicht und einer speziellen Kontaktschicht kann die Lötspitze 20 des zweiten Ausführungsbeispiels kostengünstiger und auch mit geringeren Abmessungen als die Lötspitze 1 des ersten Ausführungsbeispiels hergestellt werden. Auch im zweiten Ausführungsbeispiel hat die Lötspitze 20 auf dem hinter dem Arbeitsbereich 10 liegenden, rückwärtigen Teil einen Schutzüberzug 14.

Ausgehend von den dargestellten Ausführungsbeispielen kann die erfindungsgemäße Lötspitze in vielfacher Weise verändert werden. Beispielsweise ist es möglich, geladene Elementarteilchen unterschiedlicher Fremdmaterialien in die Gitterstruktur der Kontaktoberfläche 1 einzufügen. Möglich ist vor allem auch eine deutliche Abweichung von der in den Figuren gezeigten Geometrie der Lötspitzen 1, 20. Auch die dargestellten Größenverhältnisse sind keineswegs maßstabsgerecht, zumal sie von Ausführungsbeispiel zu Ausführungsbeispiel variieren können. In einem einfacheren Ausführungsbeispiel könnte auf den Schutzüberzug 14 eventuell auch verzichtet werden.

## Patentansprüche

1. Lötspitze (1) für eine Lötvorrichtung, die einen wärmeerzeugenden oder wärmeleitenden Grundkörper (4) umfasst und die auf Ihrer Außenseite wenigstens abschnittsweise eine von Lötzlnn (12) benetzbare Kontaktoberfläche (11) aufwelst, wobei die Atome des Materials der Kontaktoberfläche (11) in einer metallischen oder Kristall-Gitterstruktur angeordnet sind,
**dadurch gekennzeichnet, dass** geladene Elementarteilchen mindestens eines Fremdmaterials in die Gitterstruktur der Kontaktoberfläche (11) eingefügt sind, wobei Fremdmaterial jedes sich von dem Haupt- oder Basismaterial der kontaktoberfläche (11) unterscheidenden Material umfasst.

2. Lötspitze nach Anspruch 1, **dadurch gekennzeichnet, dass** die Kontaktoberfläche (11) die Oberfläche einer auf dem Grundkörper (4) vorgesehenen Kontaktschicht (7) ist.

3. Lötspitze nach Anspruch 1, **dadurch gekennzeichnet, dass** die Kontaktoberfläche (11) die Oberfläche des Grundkörpers (4) ist.

4. Lötspitze nach einem der vorangehenden Ansprüche, **dadurch gekennzeichnet, dass** die geladenen Elementarteilchen an Gitterplätze der Gitterstruktur der Kontaktoberfläche (11) und/oder an Zwischengitterplätze eingefügt sind.

5. Lötspitze nach einem der vorangehenden Ansprüche, **dadurch gekennzeichnet, dass** In die Kontaktoberfläche (11) zusätzlich zu den geladenen Elementarteilchen eines ersten Fremdmaterials auch geladene Elementarteilchen mindestens eines zweiten Fremdmaterials eingefügt sind.

6. Lötspitze nach einem der vorangehenden Ansprüche, **dadurch gekennzeichnet, dass** das erste und/oder das zweite Fremdmaterial aus der Gruppe ausgewählt ist, die Platin, Wolfram, Molybdän, Titan, Nickel, Kobalt, Germanium, Silizium, Arsen, Gallium, Stickstoff und Kohlenstoff umfasst.

7. Lötspitze nach einem der vorangehenden Ansprüche, **dadurch gekennzeichnet, dass** die geladenen Elementarteilchen eines Fremdmaterials an der Kontaktoberfläche (11) homogen verteilt sind.

8. Lütspitze nach einem der vorangehenden Ansprüche, **dadurch gekennzeichnet, dass** die Dichte der geladenen Elementarteilchen über die Lötspitze (1) variiert.

9. Lötspitze nach einem der vorangehenden Ansprüche, **dadurch gekennzeichnet, dass** geladene Elementarteilchen auch unterhalb der Kontaktoberfläche (11) In eine Gitterstruktur eingefügt sind.

10. Lötspitze nach einem der vorangehenden Ansprüche, **dadurch gekennzeichnet, dass** sich die Konzentration der geladenen Elementarteilchen mit zunehmender Tiefe unter der Kontaktoberfläche (11) verändert.

11. Lötspitze nach einem der vorangehenden Ansprüche, **dadurch gekennzeichnet, dass** die Konzentration der geladenen Elementarteilchen mit zunehmender Tiefe unter der Kontaktoberfläche (11) abnimmt.

12. Lötspitze nach einem der vorangehenden Ansprüche, **dadurch gekennzeichnet, dass** die geladenen Elementarteilchen bis mindestens in eine Tiefe (T) von 0,3 mm unterhalb der Kontaktoberfläche (11), vorzugsweise bis in eine Tiefe von mindestens 1,0 mm, in die Gitterstruktur eingefügt sind.

13. Lötspitze nach einem der vorangehenden Ansprüche, **dadurch gekennzeichnet, dass** die Tiefe, bis zu der geladene Elementarteilchen in die Gitterstruktur eingefügt sind, über die Lötspitze (1) variiert.

14. Lötspitze nach einem der vorangehenden Ansprüche, **dadurch gekennzeichnet, dass** zwischen dem Grundkörper (4) und der Kontaktschicht (7) mindestens eine weitere Schicht (6) vorgesehen ist.

15. Lötspitze nach einem der vorangehenden Ansprüche, **dadurch gekennzeichnet, dass** zwischen dem Grundkörper (4) und der Kontaktschicht (7) mindestens eine Sperrschicht (6) vorgesehen ist.

16. Lötspitze nach Anspruch 15, **dadurch gekennzeichnet, dass** die Sperrschicht (6) von Lötzinn (12) nicht benetzbar ist.

17. Lötspitze nach einem der vorangehenden Ansprüche, **dadurch gekennzeichnet, dass** die Kontaktoberfläche (11) wenigstens abschnittsweise mit einem Schutzüberzug (14) versehen ist.

18. Lötspitze nach Anspruch 17, **dadurch gekennzeichnet, dass** der Schutzüberzug (14) zinn-, chrom-, silber- oder goldhaltig ist.

## Claims

1. A soldering tip (1) for a soldering device, which comprises a heat generating or heat conducting base body (4), and which on the outside thereof has at least in sections a contact surface (11) that can be wetted by tin solder (12), with the atoms of the material of the contact surface (11) being arranged in a metallic or crystal lattice structure, **characterized in that** charged elementary particles of at least one foreign material are incorporated into the lattice structure of the contact surface (11), wherein foreign material encompasses any material differing from the main or base material of the contact surface (11).

2. The soldering tip according to claim 1, **characterized in that** the contact surface (11) is the surface of a contact layer (7) provided on the base body (4).

3. The soldering tip according to claim 1, **characterized in that** the contact surface (11) is the surface of the base body (4).

4. The soldering tip according to any one of the preceding claims, **characterized in that** the charged elementary particles are incorporated on lattice sites of the lattice structure of the contact surface (11) and/or on interstices.

5. The soldering tip according to any one of the preceding claims, **characterized in that**, in addition to the charged elementary particles of a first foreign material, charged elementary particles of at least one second foreign material are also incorporated into the contact surface (11).

6. The soldering tip according to any one of the preceding claims, **characterized in that** the first and/or the second foreign material is/are selected from the group consisting of platinum, tungsten, molybdenum, titanium, nickel, cobalt, germanium, silicon, arsenic, gallium, nitrogen, and carbon.

7. The soldering tip according to any one of the preceding claims, **characterized in that** the charged elementary particles of a foreign material are homogeneously distributed on the contact surface (11).

8. The soldering tip according to any one of the preceding claims, **characterized in that** the density of the charged elementary particles varies across the soldering tip (1).

9. The soldering tip according to any one of the preceding claims, **characterized in that** charged elementary particles are also incorporated below the contact surface (11) into a lattice structure.

10. The soldering tip according to any one of the preceding claims, **characterized in that** the concentration of the charged elementary particles is varying with an increasing depth underneath the contact surface (11).

11. The soldering tip according to any one of the preceding claims, **characterized in that** the concentration of the charged elementary particles is decreasing with an increasing depth underneath the contact surface (11).

12. The soldering tip according to any one of the preceding claims, **characterized in that** the charged elementary particles are incorporated into the lattice structure at least up into a depth (T) of 0.3 mm below the contact surface (11), preferably up into a depth of at least 1.0 mm.

13. The soldering tip according to any one of the preceding claims, **characterized in that** the depth up to which charged elementary particles are incorporated into the lattice structure varies across the soldering tip (1).

14. The soldering tip according to any one of the preceding claims, **characterized in that** at least one further layer (6) is provided between the base body (4) and the contact layer (7).

15. The soldering tip according to any one of the preceding claims, **characterized in that** at least one barrier layer (6) is provided between the base body (4) and the contact layer (7).

16. The soldering tip according to claim 15, **characterized in that** the barrier layer (6) is not wettable by tin solder (12).

17. The soldering tip according to at least one of the preceding claims, **characterized in that** the contact surface (11) is provided at least in sections with a protective coat (14).

18. The soldering tip according to claim 17, **characterized in that** the protective coat (14) contains tin, chromium, silver or gold.

## Revendications

1. Pointe de brasage (1) pour un dispositif de brasage, qui comporte un corps de base (4) générateur de chaleur ou conducteur de chaleur et qui présente sur son côté extérieur au moins par endroits une surface de contact (11) mouillable par de l'étain de brasage (12), les atomes du matériau de la surface de contact (11) étant disposés dans une structure réticulaire métallique ou à cristaux,
**caractérisée en ce que** des particules élémentaires chargées d'au moins un matériau extérieur sont insérées dans la structure réticulaire de la surface de contact (11), le matériau extérieur comprenant tout matériau se différenciant du matériau principal ou du matériau de base de la surface de contact.

2. Pointe de brasage selon la revendication 1, **caractérisée en ce que** la surface de contact (11) est la surface d'une couche de contact (7) prévue sur le corps de base (4).

3. Pointe de brasage selon la revendication 1, **caractérisée en ce que** la surface de contact (11) est la surface du corps de base (4).

4. Pointe de brasage selon l'une quelconque des revendications précédentes, **caractérisée en ce que** les particules élémentaires chargées sont insérées sur des sites réticulaires de la structure réticulaire de la surface de contact (11) et/ou en des sites réticulaires intermédiaires.

5. Pointe de brasage selon l'une quelconque des revendications précédentes, **caractérisée en ce que** des particules élémentaires chargées d'au moins un deuxième matériau extérieur sont également insérées dans la surface de contact (11) en supplément des particules élémentaires chargées d'un premier matériau extérieur.

6. Pointe de brasage selon l'une quelconque des revendications précédentes, **caractérisée en ce que** le premier et/ou le deuxième matériau extérieur est choisi dans le groupe qui comprend les éléments platine, tungstène, molybdène, titane, nickel, cobalt, germanium, silicium, arsenic, gallium, azote et carbone.

7. Pointe de brasage selon l'une quelconque des revendications précédentes, **caractérisée en ce que** les particules élémentaires chargées d'un matériau extérieur sont réparties de façon homogène sur la surface de contact (11).

8. Pointe de brasage selon l'une quelconque des revendications précédentes, **caractérisée en ce que** la densité des particules élémentaires chargées au-dessus de la pointe de brasage (1) varie.

9. Pointe de brasage selon l'une quelconque des revendications précédentes, **caractérisée en ce que** des particules élémentaires chargées sont également insérées dans une structure réticulaire au-dessous de la surface de contact (11).

10. Pointe de brasage selon l'une quelconque des revendications précédentes, **caractérisée en ce que** la concentration en particules élémentaires chargées se modifie avec une profondeur croissante au-dessous de la surface de contact (11).

11. Pointe de brasage selon l'une quelconque des revendications précédentes, **caractérisée en ce que** la concentration en particules élémentaires diminue avec une profondeur croissante au-dessous de la surface de contact (11).

12. Pointe de brasage selon l'une quelconque des revendications précédentes, **caractérisée en ce que** les particules élémentaires chargées sont insérées dans la structure réticulaire jusqu'à au moins une profondeur (T) de 0,3 mm au-dessous de la surface de contact (11), de préférence jusqu'à une profondeur d'au moins 1,0 mm.

13. Pointe de brasage selon l'une quelconque des revendications précédentes, **caractérisée en ce que** la profondeur, jusqu'à laquelle des particules élémentaires chargées sont insérées dans la structure réticulaire, varie sur la pointe de brasage (1).

14. Pointe de brasage selon l'une quelconque des revendications précédentes, **caractérisée en ce qu'**au moins une autre couche (6) est prévue entre le corps de base (4) et la couche de contact (7).

15. Pointe de brasage selon l'une quelconque des revendications précédentes, **caractérisée en ce qu'**au moins un couche de blocage (6) est prévue entre le corps de base (4) et la couche de contact (7).

16. Pointe de brasage selon la revendication 15, **caractérisée en ce que** la couche de blocage (6) ne peut pas être mouillable par de l'étain de brasage (12).

17. Pointe de brasage selon l'une quelconque des revendications précédentes, **caractérisée en ce que** la surface de contact (11) est dotée au moins par endroits d'un revêtement protecteur (14).

18. Pointe de brasage selon la revendication 17, **caractérisée en ce que** le revêtement de protection (14) contient de l'étain, du chrome, de l'argent ou de l'or.
